# EUROPEAN PATENT APPLICATION

(11) **EP 0 919 908 A2**
(43) Date of publication of application: **02.06.1999**
(21) Application number: 98250384.9
(22) Date of filing: 30.10.1998
(51) Int. Cl.: G06F 3/12

(54) **Electronic device connectable to network and method of information acquisition of the same**

(30) Priority: 01.11.1997 JP 316086/97
(71) Applicant: NEC CORPORATION, Tokyo (JP)
(72) Inventor: Torikai, Kazuya, Tokyo (JP)
(74) Representative: Patentanwälte Wenzel & Kalkoff

(57) **Abstract**

An electronic device connectable to a network comprises the communicators' address table 8 in which communication address information of the network server 17 was entered, the setting memory section 13 memorizing an information verification cycle verifying update circumstances of information, the network access control section 5 controlling access between the network 1 and the relevant electronic device, the updating information control section 11 communicating with the network server 17 which is located in a communication address memorized in the communicators' address table 8 on the basis of an information verification cycle memorized in the setting memory section 13 and verifying and controlling update circumstances of information, and the means 18 for communicating with the network server 17 in the case where information updated was verified in the updating information control section 11 and acquiring the information.

## Description

### BACKGROUND OF THE INVENTION

The present invention relates to an electronic device connectable to a network such as a network connecting printer device and the like and a method of information acquisition of its electronic device. More particularly, the present invention relates to, as an example, a network connecting printer device which makes it possible to control and update information involved with printer devices.

Conventionally, this type of a network connecting printer device is used to provide job processing information such as a job ending time and a queue time and the like for one who demands printing. An example of a conventional network connecting printer device is disclosed in Japanese Unexamined Patent Publication No.7-76155.

A conventional printer device disclosed in this Japanese Unexamined Patent Publication will be described by using Fig. 10. If a job programmed in an operation display section 101 or a job sent from a network client is added to a printing queue 116, the job processing time and job ending time required for printing is calculated in a main processor section 114 on the basis of a job programming condition, information of the number of document image pages and data compression rate information of each page. If a job is sent from the printing queue 116 to a printing outputting section 105, a printing processor section 118 updates the printing ending time of the job within the printing queue 116. Since the queue time until printing ending of each job resulting from these calculations is displayed on the display section 101, one who demands printing can be acknowledged the time when it will be completed on the spot or by return by telephone contact.

Moreover, as other examples of network connecting printer devices, the following are known.

A printer device connecting to a network disclosed in Japanese Unexamined Patent Publication No.7-121322 is characterized in that it acquires static performance information (e.g.; resolution, sheet size, color available or color not available or the like) indicating attribute information of the printer device and dynamic performance information (e.g.; printing queue job information within queue of the printer device or the like) from a plurality of printer devices on the network and only demand for printing from a user makes the desired printer device automatically chosen by a host computer (workstation ) perform printing.

A printer device connecting to a network disclosed in Japanese unexamined Patent Publication No. 7-334323 is characterized in that it is provided with the means for performing transmitting various kinds of function setting files to a printer device and changing settings.

A network printer device disclosed in Japanese Unexamined Patent Publication No.8-328781 is characterized in that a workstation on a network controls a printer device connected to the network. Moreover, as control information, there is information indicating printing setting for printing processing, selection items and operation circumstances at present and the like.

A network printer device disclosed in Japanese Unexamined Patent Publication No.9-6557 is characterized in that it can change from a printer device for outputting to another printer device for outputting through a simple operation on a display of a workstation demanding printing in order to determine a plurality of printer devices for outputting connected on the network. More particularly, it has means for ascertaining composition of a printer device that a user desires and determining a printer device by acquiring a printing indication setting information from a plurality of printer devices on the network and displaying a printing indication operation panel on the display of the workstation. Furthermore, a corresponding printer driver on the side of workstation is selected in accordance with the selected printer device for outputting and printing data is transferred to the printer device.

A network printer device disclosed in Japanese Unexamined Patent Publication No.9-114615 is characterized in that it has communicating means for verifying functions that a plurality of printer devices connected on the network have. More particularly, the printer device internally maintains function information in advance, and sends back internally maintained information responding to a demand for an information from a host device. The host device selects a printer device by analyzing received information.

However, all of these conventional network printer devices performs selecting and controlling printing means and printing methods or printer devices for outputting. Conventionally, there was no existence of a network printer device having a self-control function of specified program only for printer devices. As an example of specified programs only for printer devices described here, there are a printer driver, a firmware and the like. Recently, these may be saved in a network server in a state where updating is possible. As other programs involving with printer devices, a font cord and the like also may be saved on the network server in a state where updating is possible Hereinafter, we collectively call these "information involved with printer devices". The problems in conventional network printer devices are indicated as follows.

Firstly, one problem is that there is no means for acquiring update circumstances of information involved with printer devices. The reason why is that it is necessary for an administrator to consciously make some efforts in order to acquire update circumstances of information involved with printer devices.

Secondly, another problem is that there is only one display section that a printer device has as means for acknowledging update circumstances of information involved with a printer device to the administrator. The reason why is that a printer device has no means for transmitting information by itself to the administrator.

### SUMMARY OF THE INVENTION

One object of the present invention is to solve the problems mentioned before.

It is a further object of the present invention to acquire information involved with an electronic device such as a printer device and the like by itself and acknowledge update circumstances to the administrator. Another object of the present invention is to acquire information involved with electronic devices and update data within the electronic devices.

The present invention is an electronic device which is constituted so as to be capable of connecting to a network to which a network server is connected, and the present invention is applied to an electronic device in which information involved with the relevant electronic device itself is maintained in a state where updating the information is possible.

Moreover, the objects described above are achieved by providing a communicators' address table into which a communication address information is entered, a setting memory section memorizing information verification cycle verifying update circumstances of an information, a network access control section controlling access between the network and the present invention, an updating information control section communicating with the network server located in a communication address memorized in a communicators' address table and verifying and controlling update circumstances of an information on the basis of an information verification cycle memorized in the setting memory section through the medium of the network access control section, and means for communicating with the network server located in a communication address memorized in the communicators' address table and acquiring information.

Moreover, the present invention is an electronic device which is constituted so as to be capable of connecting to a network to which the network server is connected, and the present invention is applied to a method of information acquisition of an electronic device whose information is maintained in the foregoing network server in a state where information involved with the relevant electronic device itself can be updated.

Furthermore, the objects described above are achieved by acquiring the information in the case where an information updated was verified as well as communicating with a network server on the basis of an information verification cycle verifying update circumstances of an information and verifying and controlling update circumstances of an information.

### BRIEF DESCRIPTION OF THE DRAWINGS

These and other objects, features and advantages of the present invention will become more apparent upon a reading of the following detailed description and drawings, in which:
Fig. 1 is a block diagram showing an embodiment of the present invention,
Fig. 2 is a detailed block diagram of the communicators' address table of Fig. 1,
Fig. 3 is a detailed block diagram of the administrator information registration section and the acknowledging means memory section of Fig. 1,
Fig. 4 is a detailed block diagram of the information control table of Fig. 1,
Fig. 5 is a detailed block diagram of the setting memory section of Fig. 1,
Fig. 6 is a flowchart showing a process of a preprocess performing updating work,
Fig. 7 is a flowchart showing a process of updating verification processing of information,
Fig. 8 is a flowchart showing a process of result acknowledging process to the administrator,
Fig. 9 is a flowchart showing a process of a request process of data updating, and

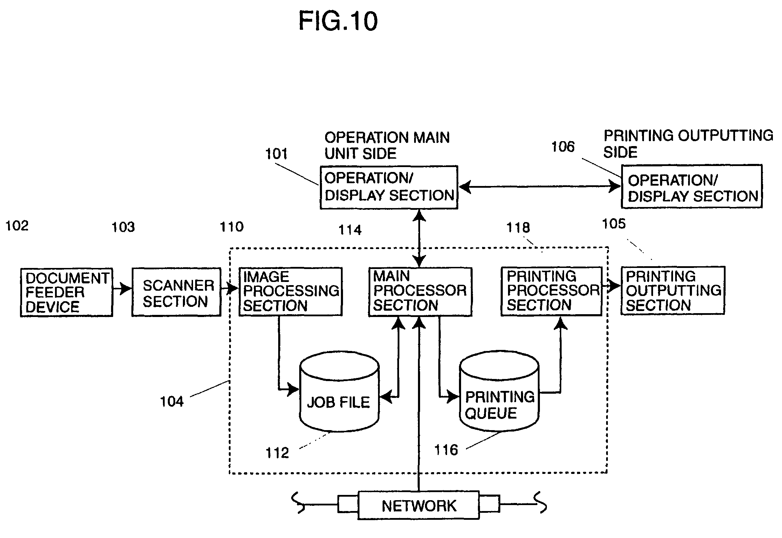

Fig.10 is a block diagram showing an example of the prior art.

### DESCRIPTION OF THE EMBODIMENTS

Next, the embodiment of the present invention will be described in detail with reference to the drawings.

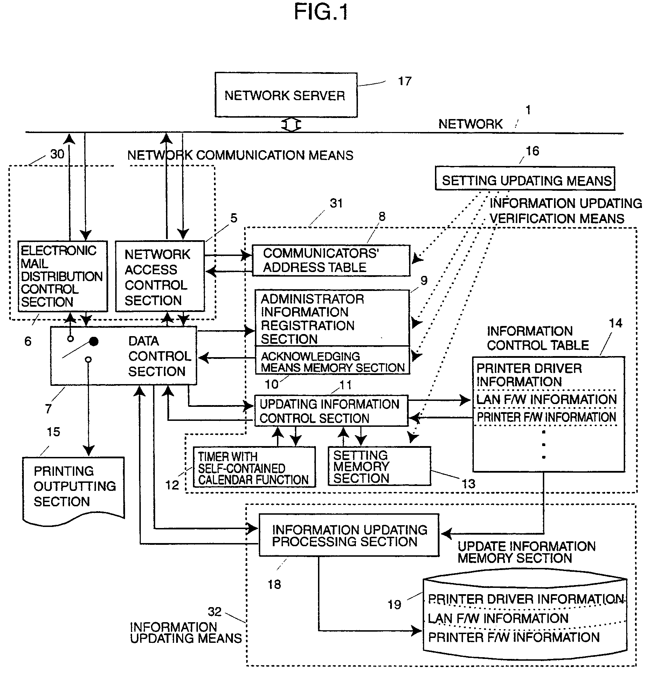

Fig. 1 is a block diagram showing an embodiment of a network printer device to which the present invention is applied. In Fig. 1, an embodiment of the present invention includes a network communication section 30 composed of e.g. a network access control section 5 for connecting with a network 1, an information update verification section 31 for previously setting an updating verification information controlled in an information control table 14 and periodically verifying whether there is an information updated or not, and an information updating section 32 for performing updating an information involving with a printer device on the basis of an updated information maintained in an update information memory section 19.

A network server 17 maintains information involved with a printer device of the present invention, where the newest information is always maintained by an administrator for a network or the original developer of the printer device. The network server 17 is an information maintaining server from which information can be freely derived by the medium of the network 1.

The network communication section 30 includes the network access control section 5 for requiring information expected to receive from the network server 17 by using a network communication protocol for performing information communication with the network server 17 via the network 1 and a network server access protocol for receiving information controlled in a printer device of the embodiment of the present invention from the network server 17 and interpreting received information, and a mail distribution control section 6 for distributing information by using a mail communication protocol for distributing information by electronic mail to the administrator for printer devices. Among network communication protocols, there are, for example, TCP/IP (Transmission Control Protocol/Internet Protocol) protocols and the like. Moreover, among network server access protocols, for example,a HTTP (Hyper Text Transfer Protocol) protocol or a FTP (File Transfer Protocol) protocol and the like.

The information updating verification section 31 includes a communicators' address table 8 for maintaining communication address information of a plurality of the network server 17s, an information control table 14 where control information involving with printer devices is controlled and stored, an updating information control section 11 updating and controlling control information within the information control table 14 on the basis of information received from the network access control section 5, an administrator information registration section 9 for maintaining information of the administrator for printer devices, and an acknowledging means memory section 10 for memorizing acknowledging means and acknowledging an update to the administrator when a received control information is updated.

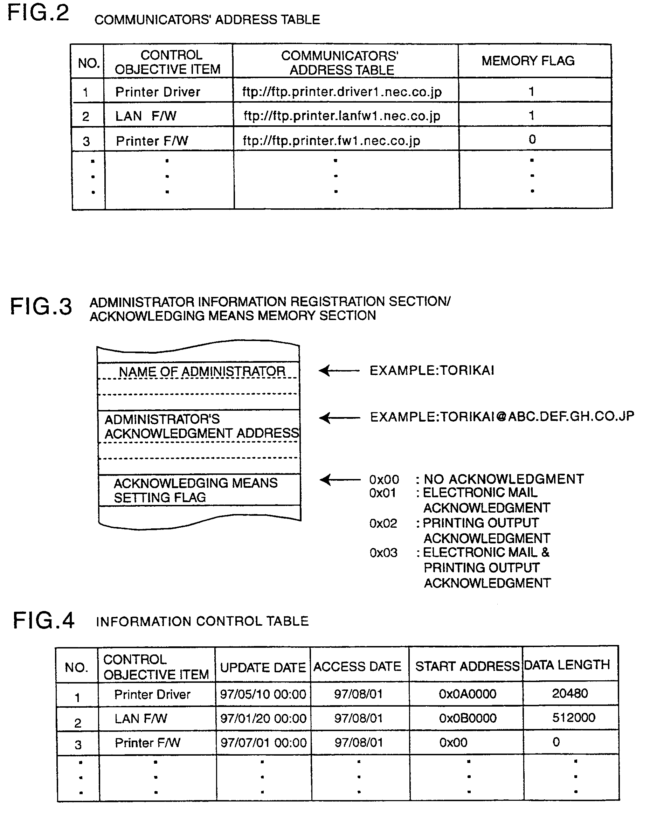

The communicators' address table 8, as shown in Fig. 2, is composed of control objective items, communicators' addresses of the network server 17 and memory flags for determining whether an updated information is memorized and maintained in the update information memory section 19 described later or not. The administrator information registration section 9, as shown in Fig. 3, is composed of the name of the administrator and the administrator's acknowledgment address. Moreover, the acknowledgment's memory section 10, similarly as shown in Fig. 3, has acknowledging means setting flag. In acknowledgment setting flag, means is set so that the result is acknowledged to the administrator for printer devices when an information of control objective is updated. As setting items, four (4) kinds of items of "not acknowledge", "acknowledgment by electronic mail", "acknowledgment by printing output" and "acknowledgment by electronic mail and by printing output" are provided.

The information control table 14 is, as shown in Fig. 4, composed of control objective items, update dates of information controlled by the network server 17, access dates when a printer device of the present invention is accessed to the network server, a start address within the update information memory section 19 in the case where control information is memorized in the update information memory section 19 described later and the data length indicating the information amount of an information.

The update information control section 11 is a controlling section which gives a direction of information verification indication according to an information verification cycle memorized in the setting memory section 13 to an information maintained in the information control table 14 and performs updating an information of the information control table 14.

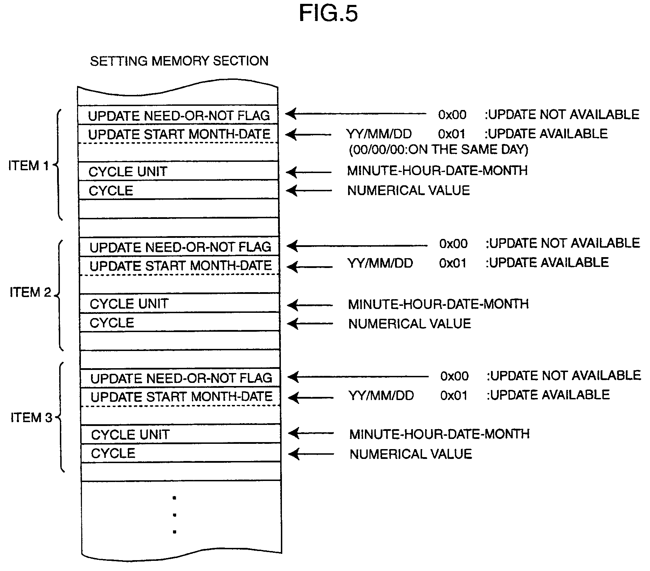

The setting memory section 13 is, as shown in Fig. 5, composed of update need-or-not flag indicating whether an information update is needed or not, update start month-year information indicating an update start month-year, a numeric value of an update verification cycle and information indicating its cycle unit. Moreover, the setting memory section 13 also has a timer 12 having a built-in calendar function for the update information control section 11 giving a direction of information verification indication.

The information updating section 32 has an information updating processing section 18 for performing updating processing of information in the case of honoring an information update demand involved with the inside of a printer device from the administrator for printer devices and the update information memory section 19 for maintaining update information.

In addition, the present embodiment of the present invention has the communicators' address table 8, the administrator information registration section 9, the acknowledging means memory section 10 and a setting updating section 16 for being capable of changing a setting of the setting memory section 13. The setting updating section 16 provides, for example, inputting means such as an operator panel and the like for being capable of key input incorporated in a printer device or exterior inputting means for enabling to change a setting by software such as a setting command and the like. Moreover, as acknowledging means for acknowledging to the administrator by printing output, this embodiment of the present invention has a printing outputting section 15.

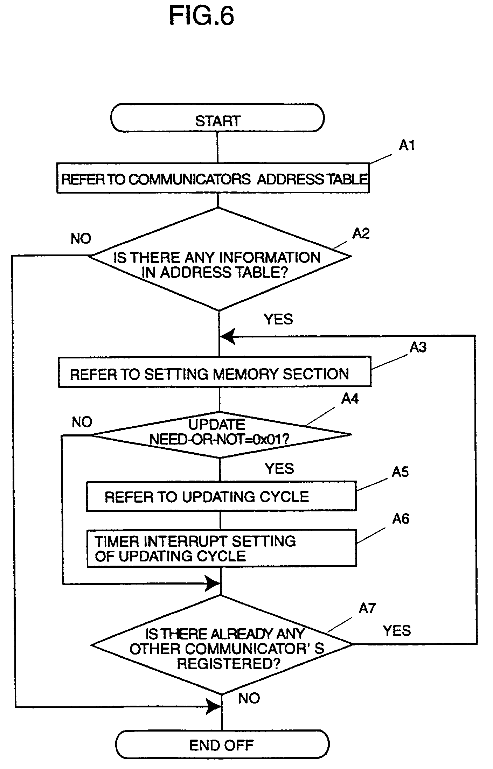

Next, referring to block diagrams from Fig. 1 to Fig. 5 and flowcharts from Fig. 6 to Fig. 9, operations of the network printer devices of this embodiment of the present invention will be described in detail below.

Firstly, referring to the flowchart of Fig. 6, the procedures of preprocess in which an updating work of control information involved with printer devices is performed will be described in detail below.

The flowchart of Fig. 6 is executed after power-up of the printer device or after a hard reset without power-up. First, the setting updating section 16 determines whether control information involved with the printer device has previously been memorized in the communicators' address table 8 or not. Since it is not necessary to periodically perform updating information in the case where any control information is not memorized in the communicators' address table 8, the procedure is not taken a step forward to the next step beyond Step A1 and Step A2 in the flowchart of Fig. 6. In an example of the communicators' address table 8 of Fig. 2, three (3) items are memorized as control objective items. Information of printer driver ("Printer Driver") to be incorporated in a client computer at the time of printing is memorized in item 1, information of a firmware program ("LAN F/W") of the network communication control section including the network communication section 30 which is necessary at the time of network connection of the printer device is memorized in item 2, and information of a firmware program ("Printer F/W") of the printing plotting control section including the printing outputting section 15 is memorized in item 3, respectively.

After verifying that more than one (1) information control is memorized in the communicators' address table 8, subsequently, the setting memory section 13 in which an updating cycle of its information is memorized is referred to (Step A3). In the setting memory section 13, as shown in Fig. 5, an update need-or-not flag, an update verification start month-date and a cycle information are memorized in each item of each control information memorized in the communicators' address table 8. First, determining that an update need-or-not flag is 0×00 or 0×01(Step A4). In the case where an update need-or-not flag is 0×01, that performing updating control information is expected is indicated. Moreover, in the case where an update need-or-not flag is 0×00, that updating is not needed is indicated, and that information update verification processing is not executed until a value of flag is changed to 0×01 in a setting.

In the case where an update need-or-not flag is 0×01, subsequently, an update start month-date and an updating cycle of an information are referred to (Step A5). In update start month-date information, a month-date-year of which an updating verification is started to execute is inputted. In the case of executing an updating verification on the same-day, as shown in the item 1 of Fig. 5, a specification of a month-date-year is set as 00/00/00. As for a cycle, by a unit specification of minute, hour, date and month, a cycle repeating updating process is set.

On the basis of an update start month-date and a cycle information, the updating information control section 11 performs a setting of a timer interrupt of an updating cycle by utilizing a self-contained timer with calendar function (Step A6). By setting this timer interrupt, an interrupt request which promotes update verification of an information of control objective is generated at the time when it is set in an updating cycle. Since a timer interrupt setting in an updating cycle is performed to all of the control information memorized in the communicators' address table 8, it is repeated until a setting for all of the information is completed (Step A7).

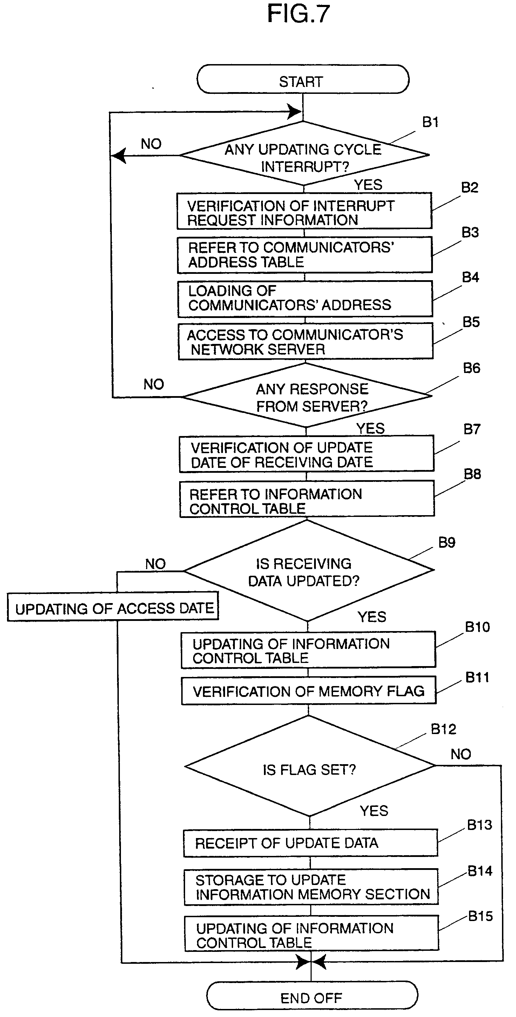

Next, referring to the flowchart of Fig. 7, the process of performing updating control information will be described in detail below.

By setting a timer interrupt in an updating cycle executed at Step A6 of Fig. 6, whether an interrupt request is generated at the time when it is set in an updating verification cycle or not is determined (Step B1). In the case where an interrupt was generated, to which one of information out of control objective items memorized in the communicators' address table 8 and the setting memory section 13 is made an interrupt request is verified (Step B2).

Next, referring to the communicators' address table 8, a communicator's address of the network server 17 maintaining information to which an interrupt request was generated is loaded (Step B3 and Step B4). Take the communicators' address table 8 of Fig. 2 as an example, and assume that an interrupt request to item 1 (Printer Driver) was generated. Then, in Step B4, a communicator's address of the network server 17 ftp://ftp.printer.driver1.nec.co.jp to a Printer Driver is being loaded.

Subsequently, an access is executed to the communicators' network server 17(Step B5). A communication control to the network server 17 is carried out in the network access control section 5. The network access control section verifies update circumstances of control information to the network server 17 via the network 1 using the network server access protocol and network communication protocol by a communication address of the network server 17 acquired in Step B4. Here, assume that an information update verification of item 1 (Printer Driver) of the communicators' address table 8 was performed.

Whether a response is sent back from the network server 17 in response to an update verification rest of a communicator's address
"ftp://ftp.printer.driver1.nec.co.jp" to the network server of in Fig. 2 or not is determined (Step B6). In the case where the response was sent back from the network server 17, the network access control section 5 transfers the received information to the updating information control section 11. The updating information control section 11 refers to the received data and verifies an update date of an information (Printer Driver) maintained in the network server 17 (Step B7). Moreover, the updating information control section 11 refers to an updating date within the information control table 14 (Step B8), it compares an updating date of an information received at present with an update date already memorized within the information control table 14 and determines them.

In the case where an update date controlled in the network server 17 and an update date of the information control table are not changed, only changing a dating of an access date within the information control table is performed. In the case where an update date of an information controlled in the network server 17 differs from an update date of the information control table, specifically, in the case where an information of the network server 17 is updated, a change of an update date is performed in addition to a change of dating of an access date within the information control table 14 (Step B9 and Step B10).

Next, the process and the procedure of whether or not to store an information (Printer Driver information) within the network server 17 updated in the update information memory section 19 within an printer device will be described below. First, a setting of whether or not to store an updated information in the update information memory section 19 is verified. Since a setting information is memorized in a memory flag of the communicators' address table 8 (See Fig. 2), the communicators' address table 8 is referred to (Step B11).

In the case where a memory flag is set, that is to say, the flag is "1", it is expected that an updated data is received from the network server 17 and stored in the update information memory section 19 Moreover, in the case where a memory flag is not set, that is to say, the flag is "0", only an updated data is verified but a receipt of an updated data is not performed (Step B12).

In an example of a Printer Driver information of item 1 of the communicators' address table 8 in Fig. 2, "1" is set in a memory flag. Thus, the network access control section 5 makes a request for sending an update data whose procedure is the same as for verifying update circumstances of item 1 to the network server 17 of the communicator's address of "ftp://ftp.printer.driver1.nec.co.jp" memorized in the communicators' address table 8 by way of the network server access control section 5 via the network 1.

On the basis of the request, an updated data (Printer Driver information) is received from the network server 17 (Step B13). The received data is stored in the update information memory section 19 by the information updating processing section 18 (Step B14). Moreover, the stored data is sent from the information updating processing section 18 to the updating information control section 11. Here, an information sent from the information processing section 18 to the updating information control section 11 is a start address on the memory map of the data stored in the update information memory section 19 and a data length indicating the size of a data. In order to memorize these information, as shown in Fig. 4, the updating information control section 11 stores a start address information and a data length in the information control table 14 (Step B15).

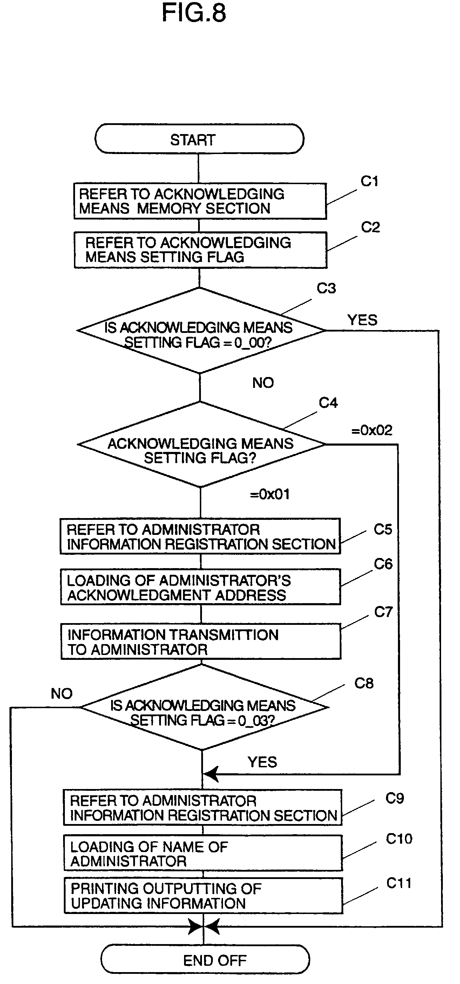

Next, referring to the flowchart of Fig. 8, in the case where control information has been updated, the process that its information is acknowledged to the administrator for printer devices will be described below in detail.

First, an acknowledging means setting flag of the acknowledging means memory section 10 shown in Fig. 3 is verified (Step C1 and Step C2). In the example of Fig. 3, a setting value is defined with one (1) byte information. In the case where the value of an acknowledging means setting flag is 0×00, it is defined that update circumstances of control information are not acknowledged to the administrator for printer devices. Thus, whether the setting value of an acknowledging means setting flag is 0×00 or not is determined (Step C3).

Next, in the case where an acknowledging means setting flag is larger than 0×00, in the example of Fig. 3, if the value of setting is 0×01, it is defined that "acknowledgment of circumstances by electronic mail" to the administrator for printer devices is performed, if the value of setting is 0×02, it is defined that "acknowledgment of circumstances by printing output" to the administrator for printer, devices is performed, and if the value of setting is 0×03, it is defined that "concurrent use of acknowledgment of circumstances by electronic mail and acknowledgment of circumstances by printing output" to the administrator for printer devices is performed, respectively.

In the case where the setting value of the acknowledging means setting flag is 0×01, the administrator's acknowledgment address of the administrator information registration section 9 shown in Fig. 3 is referred to (Step C4 and Step C5). Here, an electronic mail address of the administrator for printer devices is stored. Thus, the data control section 7 sets inside information output switchover in an electronic mail distribution, the administrator's acknowledgment address information of the administrator information registration section 9 is transferred to the electronic mail distribution control section 6 (Step C6). The electronic mail distribution control section 6 acknowledges that the control information was updated to the administrator for printer devices using mail distribution protocol and network communication protocol via the network 1 on the basis of the received administrator's acknowledgment address information by electronic mail (Step C7).

In the case where the setting value of the acknowledging means setting flag is 0×02, the name of the administrator of the administrator information registration section 9 shown in Fig. 3 is referred to (Step C4 and Step C9). Here, identification information such as the name of the administrator for printer devices and the like is stored so that a distribution address of printing output materials can be identified with "acknowledgment of circumstances by printing output". Thus, the data control section 7 sets an inside information output switchover in printing output. Moreover, to print out the administrator identification information of printing devices registered in the name of the administrator of the administrator information registration section 9 is indicated, and that control information was updated is sent as data to the printing outputting section 15 and acknowledged by printing output (Step C10 and Step C11).

In the case where the setting value of the acknowledging means setting flag is 0×03, an acknowledgment of circumstances from Step C9 and Step C11 by printing output in addition to an acknowledgment of circumstances from Step C5 to Step C7 by electronic mail is carried out (Step C8).

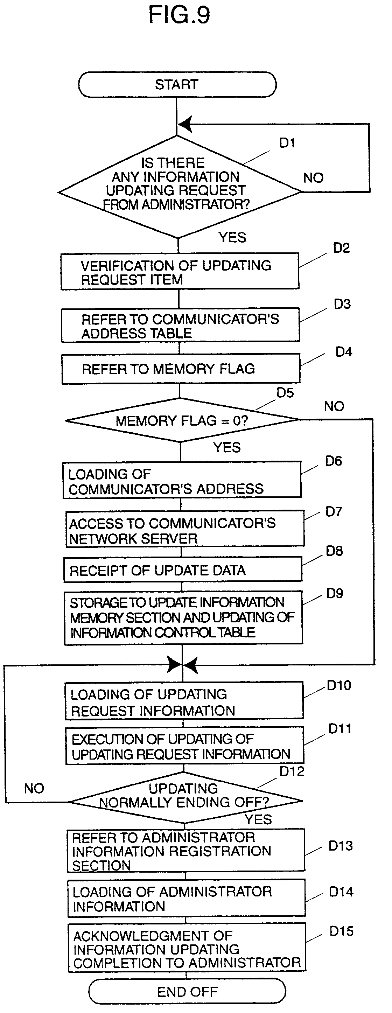

Next, referring to the flowchart of Fig. 9, the process in the case where an updating data within printer devices was demanded from the administrator for printer devices on the basis of an information of control objective will be described in detail below.

Whether an information updating request from the administrator for printer devices was received or not is verified (Step D1). An information request from the administrator is directed through the medium of the network communication section 30 via the network 1. Firstly, to which control objective item is directed the data updating request is determined by the network access control section 5 (Step D2).

Next, in order to determine whether data requested for updating is already stored in the update information memory section or not, the network access control section 5 refers to a memory flag of the communicators' address table 8 shown in Fig. 2 (Step D2 and Step D3). In the case where the memory flag is "1". an update data is already stored in the update information memory section 19 in the process from Step B12 to Step B14 of the flowchart of Fig. 7 is shown. Moreover, in the case where the memory flag is "0", since an update data is not received from the network server 17, first of all, it is necessary to receive data requested for updating from the network server 17 (Step D4 and Step D5).

Hereinafter, referring to a case of item 3 (Printer F/W) within the communicators' address table 8 of Fig. 2, an explanation will be described. As referring to the memory flag of the communicators' address table 8, the memory flag for item 3 is "0". Thus, since data required for updating is not stored in the update information memory section 19, it is necessary to newly receive an updating data involving with item 3 (Printer F/W) from the network server 17. First, referring to a communicator's address of the communicators' address table 8 shown in Fig. 2, an address information is acquired (Step D6). The procedure of data acquisition and storage to the update information memory section is the same as the procedure from Step B13 to Step B15 of the flowchart of Fig. 7. In this example, there is a difference in that the network server 17 to access is a server including an information of item 3 (Printer F/W) (Step D8 and Step D9).

Data updating processing is started in a state where data requested for updating is stored in the update information memory section 19. The information updating processing section 18 receives data requested for updating from the update information memory section 19. The relevant data, which are an address and a data length stored in the update information memory section 19, is received from the update information memory section 19 with reference to a start address and a data length of the information control table 14 in Fig. 4 (Step D10). Next, updating data of a printer device requested is executed (Step D11). For example, in the case where an updating request for item 2 (LAN F/W) of the communicators' address table 8 in Fig. 2 was received from the administrator, an updating of a firmware program of the network communication control section which is necessary at the time of connecting printer devices including the network communication section 30 to the network is carried out. Moreover, in the case where an updating request to item 3 (Printer F/W) was received from the administrator, an updating of a firmware program of the printing plotting control section including the printing outputting section 15 is carried out. In this embodiment of the present invention, the procedure of updating data is not claimed.

Whether an updating of data requested was normally and completely executed or not is verified, and in the case where the updating was not completed, an updating processing is executed again by returning to Step 10D (Step D12). When the updating of data requested is normally completed, a completion acknowledgment is sent to the administrator for printer devices who requested the updating. A completion acknowledgment to the administrator depends upon the setting vague of the acknowledging means setting flag of the acknowledging means setting memory section 10 shown in Fig. 3. The procedure of acknowledgment is the same as the procedure described in the flowchart of Fig. 8 (from Step D13 to Step D15).

Thus, according to this embodiment of the present invention, the following effects can be obtained.

The first effect which can be obtained according to this embodiment of the present invention enables to provide acquiring means for automatically and periodically acquiring a plurality of optional updating data involved with printer devices rather than consciously acquiring them by the administrator. The reason why is that this embodiment of the present invention comprises an address table for memorizing information of the network server maintained a plurality of optional data and the updating information control section for periodically verifying information.

The second effect which can be obtained according to this embodiment of the present invention enables not only to acquire updating information of a plurality of optional data involved with printer devices, but also to provide acknowledging means for acknowledging circumstances to the administrator for printer devices in the sole case where the information was updated. As information providing means, it enables to send an electronic mail or to print output in printer devices. The reason why is that it comprises the information control table and enables to compare an update date of a received information with an update date controlled within a control table and verify them. Moreover, as acknowledging means, by having the electronic mail distribution control section, it enables to not only acknowledge to the administrator by printing output, but also acknowledge to the administrator by electronic mail.

The third effect which can be obtained according to this embodiment of the present invention enables to acquire an updating information of optional data involving with printer devices and update data such as programs and the like within printer devices according to instruction from the administrator. The reason why is that it has the information updating processing section and the update information memory section for maintaining necessary data for updating data such as programs and the like within printer devices.

Furthermore, it should be noted that as for an electronic device connectable to the network of the present invention, its details are not limited by the embodiment of the present invention described above, but various alternations of them are possible. As an example, the communicators' address table 8 is expected for memorizing information involved with printer devices, but the information is not necessarily involved with printer devices. For example, in the case where the network server 17 of fixed address maintaining a certain data exists, a communicator's address of this network server 17 can also be stored in the communicators' address table 8.

As an example of Fig. 2, although item 1 "Printer Driver" is an information involved with printer devices, since it is not applicable to data such as firmware programs of printer devices and the like, the present invention is adapted to use for verifying update circumstances and receiving data of "Printer Driver". A data verified updating of information and received from the network server 17 also can be similarly maintained in the update information memory section 19.

Since data of "Printer Driver" stored in the update information memory section 19 is no use for an internal printer device, a data receiving request for its data is honored by the way of the network 1 from the computer of the administrator connected to the network 1, according to its direction, data stored in the update information memory section 19 will be distributed. Also in this case, the information updating processing section 18 enables to perform distribution of data stored in the network access control section 5 and in the update information memory section 19 by the way of a network communication protocol 2.

Furthermore, the above described embodiment, shows the present invention was applied to printer devices, but not limited to this, if they are electronic devices such as facsimile devices and the like connectable to the network, to which the present invention is preferably applicable.

As described above in detail, according to the present invention, it enables to acquire information involved with an electronic device such as a printer device and the like by itself and acknowledge update circumstances to the administrator. Moreover, it can acquire information involved with electronic devices and update data within the electronic devices.

## Claims

1. An electronic device constituted so as to be connectable to a network to which a network server is connected, said network server which is capable of maintaining an information about said electronic device connected to said network in a state where said information can be updated, said electronic device connectable to said network comprising:
a communicators' address table in which communication address information of said network server has been memorized;
a setting memory section memorizing an information verification cycle verifying update circumstances of said information;
a network access control section controlling access between said network and said relevant electronic device;
an updating information control section communicating with said network server located in a communication address memorized in said communicators' address table through use of said network access control section based on an information verification cycle memorized in said setting memory section and verifying and controlling update circumstances of an information about said electronic device; and
means for communicating with said network server located in a communication address memorized in said communicators' address table through use of said network access control section and acquiring said information in a case where an information about said electronic device updated was verified in said updating information control section.

2. An electronic device connectable to a network as claimed in claim 1, wherein said electronic device has a first information control table in which an access date of an information about said electronic device and an update date of an information about said electronic device processed by said updating information control section have been memorized.

3. An electronic device connectable to a network as claimed in claim 1, wherein said electronic device has
an update information memory section memorizing an acquired information about said electronic device, and
a second information control table memorizing memory addresses and data sizes of said update information memory section.

4. An electronic device connectable to a network as claimed in claim 1, said electronic device comprising:
an administrator information registration section memorizing an identification information and an electronic mail address of an administrator for said electronic device;
an electronic mail distribution section distributing update circumstances of said information to an electronic mail address of an administrator memorized in said administrator information registration section; and
a printing outputting section printing update circumstances of said information as well as an identification information of an administrator memorized in said administrator information registration section,
wherein an update circumstances acknowledgment setting of said information set by said electronic mail distribution section and said printing outputting section is memorized in said administrator information registration section, and said electronic device has a control section making at least one of said electronic mail distribution section and said printing outputting section acknowledge update circumstances of said information based on an update circumstances acknowledgment setting memorized in said administrator information registration section.

5. An electronic device connectable to a network as claimed in claim 4, wherein said electronic device has an information updating processing section updating said information by using an information memorized in said update information memory section in accordance with a direction of said administrator.

6. An electronic device constituted so as to be connectable to a network to which a network server is connected, said network server which is capable of maintaining an information about said electronic device connected to said network in a state where said information can be updated, said electronic device connectable to said network comprising:
a communicators' address table in which communication address information of said network server has been memorized;
a setting memory section memorizing an information verification cycle verifying update circumstances of said information;
a network access control section controlling an access between said network and said relevant electronic device;
a first information control table in which an access date of an information about said electronic device and an update date of an information about said electronic device have been memorized;
an update information control section communicating with said network server located in a communication address memorized in said communicators' address table through use of said network access control section based on an information verification cycle memorized in said setting memory section and verifying and controlling update circumstances of information about said electronic device based on an access date and update date memorized in said first information control table;
means for communicating with said network server located in a communication address memorized in said communicators' address table through use of said network access control section and acquiring an information about said electronic device in a case where an information about said electronic device updated has been verified in said updating information control section;
an update information memory section memorizing an acquired information about said electronic device; and
a second information control table memorizing memory addresses and data sizes of said update information memory section.

7. An electronic device constituted so as to be connectable to a network to which a network server is connected, said network server which is capable of maintaining an information about said electronic device connected to said network in a state where said information can be updated, said electronic device connectable to said network comprising:
a communicators' address table in which communication address information of said network server has been memorized;
a setting memory section memorizing an information verification cycle verifying update circumstances of said information;
a network access control section controlling an access between said network and said relevant electronic device;
an updating information control section communicating with said network server located in a communication address memorized in said communicators' address table through use of said network access control section based on an information verification cycle memorized in said setting memory section and verifying and controlling update circumstances of an information about said electronic device;
means for communicating with said network server located in a communication address memorized in said communicators' address table through use of said network access control section and acquiring said information in a case where an information about said electronic device updated has been verified in said updating information control section;
an administrator information registration section memorizing on identification information and an electronic address of an administrator for said electronic device;
an electronic mail distribution section distributing update circumstances of said information to an electronic mail address of an administrator memorized in said administrator information registration section; and
a printing outputting section printing update circumstances of said information as well as an identification information of an administrator memorized in said administrator information registration section,
wherein an update circumstances acknowledgment setting of said information set by said electronic mail distribution section and said printing outputting section is memorized in said administrator information registration section, and said electronic device has a control section making at least one of said electronic mail distribution section and said printing outputting section acknowledge update circumstances of said information based on an update circumstances acknowledgment setting memorized in said administrator information registration section.

8. An electronic device constituted so as to be connectable to a network to which a network server is connected, said network server which is capable of maintaining an information about said electronic device connected to said network in a state where said information can be updated, said electronic device connectable to said network comprising:
a communicators' address table in which communication address information of said network server has been memorized;
a setting memory section memorizing an information verification cycle verifying update circumstances of said information;
a network access control section controlling an access between said network and said relevant electronic device;
an updating information control section communicating with said network server located in a communication address memorized in said communicators' address table through use of said network access control section based on an information verification cycle memorized in said setting memory section and verifying and controlling update circumstances of an information about said electronic device;
means for communicating with said network server located in a communication address memorized in said communicators' address table through use of said network access control section and acquiring said information in a case where information about said electronic device updated has been verified in said updating information control section;
an updating information memory section memorizing an acquired information about said electronic device; and
an information updating processing section updating said information by using information memorized in said update information memory section in accordance with a direction of an administrator.

9. An electronic device constituted so as to be connectable to a network to which a network server is connected, said network server which is capable of maintaining information about said electronic device connected to said network in a state where said information can be updated, said electronic device connectable to said network comprising:
a communicators' address table in which communication address information of said network server has been memorized;
a setting memory section memorizing an information verification cycle verifying update circumstances of said information;
a network access control section controlling an access between said network and said relevant electronic device;
a first information control table in which an access date of an information about said electronic device and an update date of an information about said electronic device have been memorized;
an updating information control section communicating with said network server located in a communication address memorized in said communicators' address table through use of said network access control section based on an information verification cycle memorized in said setting memory section and verifying and controlling update circumstances of an information about said electronic device based on an access date and an update date memorized in said first information control table;
means for communicating with said network server located in a communication address memorized in said communicators' address table through use of said network access control section and acquiring information about said electronic device in a case where information about said electronic device updated has been verified in said updating information control section;
an updating information memory section memorizing acquired information about said electronic device;
a second information control table memorizing memory addresses and data sizes of said updating information memory section;
an administrator information registration section memorizing identification information and an electronic mail address of an administrator for said electronic device;
an electronic mail distribution section distributing update circumstances of said information to an electronic mail address of an administrator memorized in said administrator information registration section ;
a printing outputting section printing update circumstances of said information as well as identification information of an administrator memorized in said administrator information registration section;
a control section making at least one of said electronic mail distribution section and said printing outputting section acknowledge update circumstances of said information based on an update circumstances acknowledgment setting of said information set by said electronic mail distribution section and said printing outputting section memorized in said administrator information registration section; and
an information updating processing section updating said information by using information memorized in said update information memory section in accordance with a direction of said administrator.

10. An electronic device connectable to a network as claimed in any one of claims 1 to 9, wherein said electronic device is a printer device.

11. An electronic device connectable to a network as claimed in claim 10, wherein information about said electronic device includes programs such as a printer driver and a firmware only for printer devices.

12. A method of information acquisition of an electronic device constituted so as to be connectable to a network to which a network server is connected, said method of information acquisition of an electronic device comprising steps of:
a network server maintaining information about an electronic device in a state where said information can be updated;
said electronic device communicating with said network server based on an information verification cycle which is set and said electronic device verifying and controlling update circumstances of information about said electronic device; and
said electronic device acquiring information about said electronic device in a case where information about said electronic device updated was verified.

13. A method of information acquisition of an electronic device as claimed in claim 12, wherein in a step of controlling said update circumstances, said electronic device memorizes an access date of information about an electronic device and an update date of an information about said electronic device, and said step is a step of determining update circumstances of information about an electronic device maintained in said network server based on said access date and said update date.

14. A method of information acquisition of an electronic device as claimed in claim 12, said method comprising the steps of:
memorizing identification information and an electronic mail address of an administrator for said electronic device;
distributing update circumstances of information about an electronic device to memorized electronic mail address of an administrator; and
printing update circumstances of information about said electronic device as well as memorized identification information of an administrator.
